# EUROPÄISCHE PATENTSCHRIFT

(11) **EP 0 455 858 B1**
(45) Veröffentlichungstag und Bekanntmachung des Hinweises auf die Patenterteilung: **01.12.1993**
(21) Anmeldenummer: 90108886.4
(22) Anmeldetag: 11.05.1990
(51) Int. Cl.: B60R 22/46

(54) **Ansteuermechanismus für eine an einem Fahrzeugsitz angebrachte Rückstrammeinrichtung**
Mechanical control device for a tensioning device mounted on a vehicle seat
Mécanisme de commande d'un dispositif tendeur monté sur un siège de véhicule

(43) Veröffentlichungstag der Anmeldung: 13.11.1991
(73) Patentinhaber: TRW REPA GMBH, 73553 Alfdorf (DE)
(72) Erfinder: Föhl, Artur, D-7060 Schorndorf (DE)
(74) Vertreter: Degwert, Hartmut, Dipl.-Phys.

(56) Entgegenhaltungen:
- DE-A- 2 658 747
- FR-A- 2 429 131
- GB-A- 2 220 128

## Beschreibung

Die Erfindung betrifft einen Ansteuermechanismus für eine an einem Fahrzeugsitz angebrachte Rückstrammeinrichtung eines Sicherheitsgurt-Rückhaltesystems in Fahrzeugen, mit in einem Gehäuse angeordneten Funktionsteilen, die eine Sperreinrichtung zur Sperrung der Ansteuerfunktion umfassen, wobei diese Sperreinrichtung zwischen einem Sperrzustand und einem Freigabezustand umsteuerbar ist und zur Umsteuerung der Sperreinrichtung zwischen ihren zwei Zuständen ein Sperrelement in einer Wandung des Gehäuses verschiebbar gelagert ist und sich durch diese Wandung vom Inneren des Gehäuses nach außen erstreckt.

Bei mechanischen oder pyrotechnischen Rückstrammeinrichtungen, die in einen Fahrzeugsitz integriert sind, kann der komplette Fahrzeugsitz mit Rückstrammeinrichtung als fertiger Modul aufgebaut sein, der als solcher durch Aufschieben auf die am Fahrzeugboden befestigten Schienen in das Fahrzeug eingebaut wird. Der mechanische Ansteuermechanismus eines solchen Rückstrammsystems ist mit einer fahrzeugsensitiven Masse ausgestattet, die auf Verzögerungen anspricht. Die Auslöseschwelle ist je nach Fahrzeugtyp verschieden. Bei der Handhabung und Montage des fertigen Fahrzeugsitzes können Stöße auftreten, die im Extremfall die Auslöseschwelle überschreiten und daher zu einer Aktivierung des Rückstrammantriebes führen. Die Rückstrammeinrichtung ist dann nicht mehr funktionsfähig.

Der Erfindung liegt die Aufgabe zugrunde, einen Ansteuermechanismus der eingangs angegebenen Art dahingehend weiterzubilden, daß die Sperrfunktion der Sperreinrichtung allein durch die Montage des Fahrzeugsitzes beim Aufschieben desselben auf die am Fahrzeugboden befestigten Führungsschienen aufgehoben wird.

Diese Aufgabe wird bei einem Ansteuermechanismus der eingangs angegebenen Art erfindungsgemäß dadurch gelöst, daß das Sperrelement durch einen Taster betätigbar ist, der am Sitzrahmen beweglich gelagert ist und mit seinem Tastende bei unmontiertem Fahrzeugsitz in die Schiebebahn hineinragt, die am Sitzrahmen für die Aufnahme der am Fahrzeugaufbau befestigten Schienen gebildet ist, sowie bei der Montage des Fahrzeugsitzes im Fahrzeug durch eine dieser Schienen aus der Schiebebahn herausgedrückt wird. Da durch das Aufschieben des Fahrzeugsitzes auf die Führungsschienen eine automatische Entsicherung der Rückstrammeinrichtung erfolgt, entfällt die Notwendigkeit, besondere Montagevorschriften einzuhalten, damit die Funktionstüchtigkeit der Rückstrammeinrichtung an einem eingebauten Fahrzeugsitz gewährleistet ist. Bei einer etwaigen Demontage des Fahrzeugsitzes kann der Taster wieder in die Schiebebahn hineinragen, wodurch die Rückstrammeinrichtung automatisch wieder gesichert wird.

Besonders zweckmäßig ist eine Ausführungsform, bei welcher das Sperrelement als axial verschiebbar geführter Stift ausgebildet ist, der durch Federspannung in seine Sperrstellung vorbelastet ist, in welcher er an einer fahrzeugsensitiven Trägheitsmasse eines mechanischen Sensors diese arretierend angreift.

Auch im eingebauten Zustand des Fahrzeugsitzes können Stöße auftreten, die unter gewissen Umständen die Auslöseschwelle der Rückstrammeinrichtung bzw. des mechanischen Sensors überschreiten. Ein heftiger Stoß tritt beispielsweise dann auf, wenn während einer Längsverstellung des Fahrzeugsitzes eine plötzliche Abbremsung des Fahrzeugs erfolgt und der Fahrzeugsitz durch seine Massenträgheit auf den Führungsschienen vorgeschoben wird und dann plötzlich verrastet oder gegen seine Endbegrenzung anschlägt. Durch eine vorteilhafte Weiterbildung der Erfindung wird verhindert, daß während einer Längsverstellung des Fahrzeugsitzes eine Aktivierung der Rückstrammeinrichtung durch Stöße erfolgen kann. Bei dieser Ausführungsform ist der Taster durch Betätigung einer zur Sitzentriegelung vorgesehenen Handhabe im Sinne einer Umsteuerung des Sperrelements in seinen Sperrzustand bewegbar, nachdem sein Tastende durch die Schiene aus der Schiebebahn herausgedrückt wurde. Der Taster kann bei dieser Ausführungsform sowohl schwenkbar als auch translationsverschiebbar gelagert sein und führt bei Betätigung durch die Schiene eine Schwenkbewegung, bei Bewegung durch die Handhabe aber eine Translationsbewegung aus. Gemäß einer anderen Ausführungsform ist der Taster mittelbar über ein Zwischenglied an das Sperrelement angekoppelt, und dieses Zwischenglied ist an dem Taster beweglich gelagert sowie durch Federkraft zu dem Taster hin vorbelastet. Bei beiden Ausführungen wird der durch das Ertasten der Schiene verursachten Schwenkbewegung des Tasters eine Bewegung überlagert, durch die eine Umsteuerung der Sperreinrichtung aus dem bereits eingenommenen Freigabezustand in den Sperrzustand erfolgt. Während bei der ersteren Ausführungsform der Schwenkbewegung eine entgegengesetzt gerichtete Translationsbewegung überlagert wird, erfolgt bei der zweiten Ausführungsform eine Überlagerung von zwei gegenläufigen Schwenkbewegungen.

Weitere Vorteile und Merkmale der Erfindung ergeben sich aus der folgenden Beschreibung mehrerer Ausführungsformen und aus der Zeichnung, auf die Bezug genommen wird. In der Zeichnung zeigen:
- Fig. 1: eine Perspektivansicht eines Fahrzeugsitzes mit integrierter Rückstrammeinrichtung;
- Fig. 2: eine im Schnitt und schematisch gezeigte Gesamtansicht eines Ansteuermechanismus mit mechanischem fahrzeugsensitiven Sensor und Sperreinrichtung, im Zustand vor der Montage des Fahrzeugsitzes;
- Fig. 3: den in Fig. 2 gezeigten Ansteuermechanismus nach Montage des Fahrzeugsitzes;
- Fig. 4: einen Querschnitt entlang Linie IV-IV in Fig. 3;
- Fig. 5: eine Darstellung des Ansteuermechanismus im Zustand nach der Montage des Fahrzeugsitzes und bei Betätigung der Handhabe zur Sitzentriegelung;
- Fig. 6: eine andere Ausführungsform eines Tasters für den Ansteuermechanismus; und
- Fig. 7: eine Schnittansicht einer Hemmeinrichtung für einen Sperrstift.

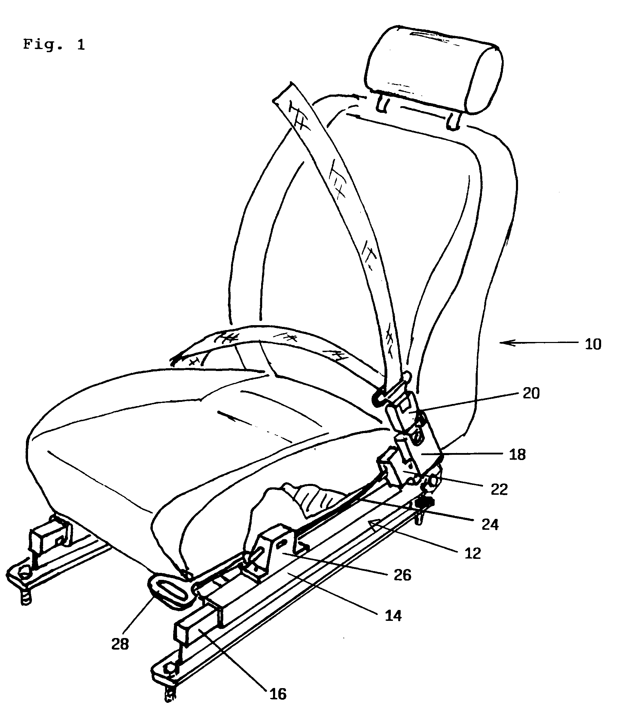

Der in Fig. 1 gezeigte Fahrzeugsitz 10 ist auf einem Sitzrahmen 12 aufgebaut, dessen hohle Führungsprofile 14 auf die am Fahrzeugboden verankerten Schienen 16 aufgeschoben werden. An der einen Seite des Sitzrahmens 12 ist eine Rückstrammeinrichtung 18 angeordnet. Diese Rückstrammeinrichtung 18 arbeitet mit einem pyrotechnischen Antrieb, der am Gurtschloß 20 angreift und dieses im Aktivierungsfall schräg zum Fahrzeugboden hin verlagert. Der Ansteuermechanismus dieser Rückstrammeinrichtung 18 umfaßt einen mechanischen fahrzeugsensitiven Sensor 22. Dieser ist über einen Seilzug 24 mit einer Steuereinrichtung 26 verbunden, die auf das Führungsprofil 14 aufgesetzt und neben einer Handhabe 28 zur Betätigung der Sitzentriegelung angeordnet ist.

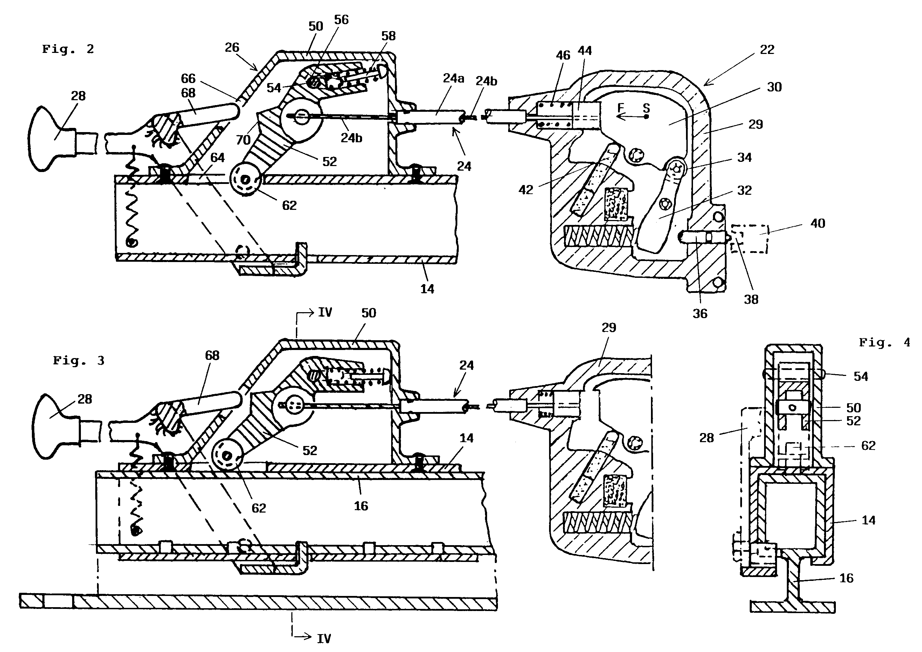

Es wird zunächst unter Bezugnahme auf Fig. 2 der mechanische Sensor 22 beschrieben, der als solcher nicht Gegenstand der Erfindung ist. In einem Gehäuse 29 ist eine fahrzeugsensitive Trägheitsmasse 30 verschwenkbar gelagert. Ein federbeaufschlagtes Schlagstück 32 in Form eines schwenkbar gelagerten zweiarmigen Hebels stützt sich mit einer Rolle 34 in einer konkaven Ausnehmung der Trägheitsmasse 30 ab. In dem in Fig. 2 gezeigten Zustand liegt der eine Arm des Schlagstücks 32 einem in einer Bohrung des Gehäuses 29 verschiebbar gelagerten Schlagbolzen 36 im Abstand gegenüber. Der Schlagbolzen 36 liegt seinerseits mit seinem äußeren Ende dem Schlagzünder 38 einer pyrotechnischen Ladung 40 gegenüber, die Bestandteil des Rückstrammantriebs der Rückstrammeinrichtung 18 (Fig. 1) ist. Ein federbeaufschlagter Druckstift 42 stützt sich auf einer Fläche der Trägheitsmasse 30 ab und bestimmt gemeinsam mit der durch die konkave Ausnehmung an der Trägheitsmasse 30 gebildeten Steuerkurve die Auslöseschwelle, bei welcher die Trägheitsmasse 30 unter der Einwirkung von an ihrem Schwerpunkt S angreifenden Verzögerungskräften in Richtung eines Pfeiles F entgegen dem Uhrzeigersinn verschwenkt wird, um das Schlagstück 32 freizugeben, damit dieses unter der Wirkung der Federbeaufschlagung zum Schlagbolzen 36 hin beschleunigt wird, bis es auf dem Schlagbolzen auftrifft und diesen in den Schlagzünder 38 eintreibt.

In einer weiteren Bohrung des Gehäuses 29 ist ein Sperrelement in Form eines Sperrstiftes 44 axial verschiebbar gelagert. Dieser Sperrstift 44 ragt mit seinem einen Ende in das Innere des Gehäuses 29 hinein und greift an einer stufenförmigen Aussparung der Trägheitsmasse 30 an, um diese in ihrer in Fig. 2 gezeigten Bereitschaftsstellung zu sichern. In diese Sperrstellung wird der Sperrstift 44 durch eine Druckfeder 46 vorbelastet, die sich zwischen dem äußeren Ende des Sperrstiftes 44 und dem Boden der diesen axial verschiebbar aufnehmenden Gehäusebohrung abstützt. Diese Gehäusebohrung setzt sich über eine Verengung in einen koaxialen äußeren Bohrungsabschnitt fort, in den das eine Ende des Außenmantels 24a des Seilzuges 24 eingeschoben ist. Das Zugseil 24b des Seilzuges 24 ist am äußeren Ende des Sperrstiftes 44 befestigt.

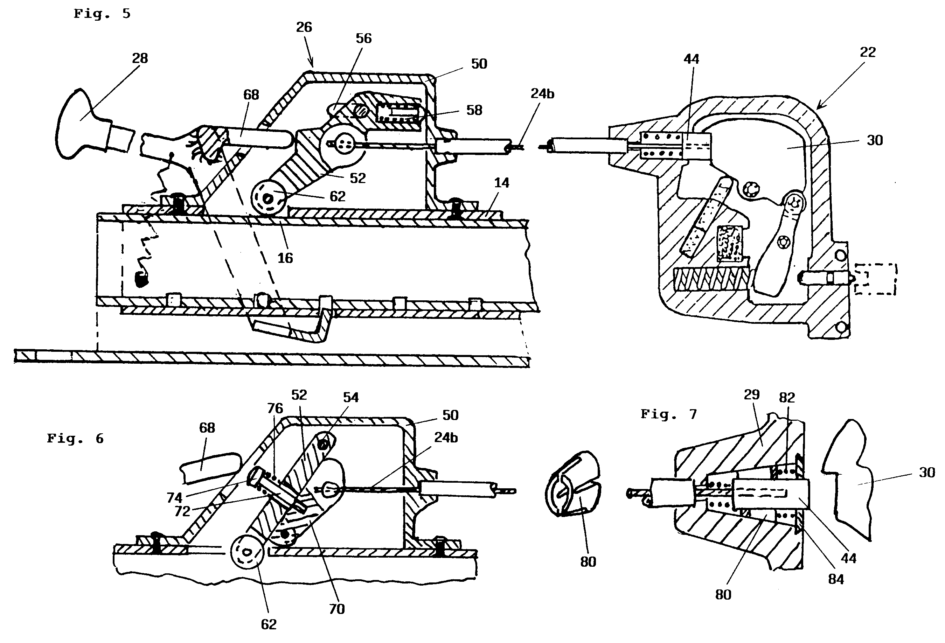

Die Steuereinrichtung 26 ist in einem nach unten offenen Gehäuse 50 angeordnet, das auf die Oberseite des Führungsprofils 14 aufgesetzt und mittels Nieten daran befestigt ist. Ein Tasthebel 52 ist im Inneren des Gehäuses 50 sowohl schwenkbar als auch translationsverschiebbar angeordnet. Die Führung des Tasthebels 52 erfolgt mittels eines seitlich von diesem abstehenden Lagerstiftes 54 und zwei in den Seitenwandungen des Gehäuses 50 angebrachten Langlochöffnungen 56, die aus Fig. 5 besser ersichtlich sind. Der Lagerstift 54 greift in die beiden Langlochöffnungen 56 ein und wird in diesen geführt. Der Tasthebel 52 weist ein mit einer Bohrung versehenes abgekröpftes Ende auf. In dieser Bohrung ist ein federbelasteter Druckstift 58 aufgenommen, der sich mit einem abgerundeten Kopf auf der Innenwandung des Gehäuses 50 abstützt. Das in das Gehäuse 50 hineingeführte Ende des Zugseils 24b greift etwa in der Mitte des Tasthebels 52 an. Der Tasthebel 52 ist an seinem Tastende mit einer Tastrolle 62 versehen. Diese Tastrolle 62 ragt durch eine Öffnung 64 des Führungsprofils 14 in den Hohlraum desselben hinein. Das Gehäuse 50 ist mit einer Öffnung 66 versehen, durch die hindurch ein Druckfinger 68 der am Sitzrahmen 12 schwenkbar gelagerten Handhabe 28 in das Innere des Gehäuses 50 und bis gegen einen Druckansatz 70 des Tasthebels 52 bewegt werden kann.

Bei dem in Fig. 2 gezeigten Zustand ist der Fahrzeugsitz noch nicht montiert. Durch die Druckfeder 46 wird der Sperrstift 44 in seiner Sperrstellung gehalten, in welcher er die Trägheitsmasse 30 in ihrer Bereitschaftsstellung sichert. Über das Zugseil 24b wird der Tasthebel 52 in solchem Sinne verschwenkt, daß die Tastrolle 62 durch die Öffnung 64 in den Hohlraum des Führungsprofils 14 ragt und der Lagerstift 54 in Anlage an dem einen Ende der Langlochöffnungen 56 des Gehäuses 50 in Anlage gehalten wird. Der Tasthebel 52 ist somit in diesem Zustand schwenkbar gelagert.

Bei der Montage des Fahrzeugsitzes dringt die Schiene 16 in den Hohlraum des Führungsprofils 14 ein und drückt die Tastrolle 62 aus diesem heraus, wodurch der Tasthebel 52 in solchem Sinne verschwenkt wird, daß ein Zug auf das Zugseil 24b ausgeübt wird, um den Sperrstift 44 in seine Freigabestellung zu bewegen. Dieser Zustand ist in Fig. 3 gezeigt. Der mechanische Sensor 22 ist nun entsichert, so daß die Rückstrammeinrichtung 18 aktiviert werden kann.

Wird nun in diesem Zustand die Handhabe 28 betätigt, wie in Fig. 5 dargestellt, um die Sitzverriegelung zu lösen und eine Längsverstellung des Fahrzeugsitzes zu ermöglichen, so drückt der Druckfinger 68 gegen den Druckansatz 70 des Tasthebels 52, dessen Tastrolle 62 sich nun auf der Oberseite der Schiene 16 abstützt. Der Tasthebel 52 kann dem von dem Druckfinger 68 ausgeübten Druck nur ausweichen, indem er eine Translationsbewegung ausführt, bei welcher der Lagerstift 54 sich in den Langlochöffnungen 56 zum entgegengesetzten Ende derselben hin bewegt, wobei die den Druckstift 58 belastende Druckfeder zusammengedrückt wird. Das Zugseil 24b ist nun entlastet, so daß die Druckfeder 46 den Sperrstift 44 wieder in die Sperrstellung drückt. Sobald eine Betätigung der Handhabe 28 erfolgt, wird also die Trägheitsmasse 30 des Sensors 22 erneut in ihrer Bereitschaftsstellung gesichert.

Bei der in Fig. 6 gezeigten Ausführungsform ist der Tasthebel 52 mittels des Lagerstiftes 54 nur schwenkbar und translationsfest im Gehäuse 50 gelagert. An dem Tasthebel 52 ist ein Zwischenhebel 70 schwenkbar gelagert. Das Zugseil 24b greift am freien Ende dieses Zwischenhebels 70 an. In diesen Zwischenhebel 70 ist ein Druckstift 72 eingesetzt, der sich quer durch eine Öffnung des Tasthebels 52 erstreckt und ein verbreitertes Kopfstück 74 aufweist, das dem Ende des Druckfingers 68 gegenüberliegt. Zwischen dem Kopfstück 74 und der Fläche des Tasthebels 52 stützt sich eine Druckfeder 76 ab, die bestrebt ist, den Zwischenhebel 70 in Anlage an dem Tasthebel 52 zu halten. Die Druckfeder 72 ist so stark bemessen, daß der Zwischenhebel 70 in Anlage an dem Tasthebel 52 verbleibt, wenn die Tastrolle 62 durch die Schiene 16 hochgedrückt wird. Bei einer Schwenkbewegung des Tasthebels 52 wird daher auch der Zwischenhebel 70 mitverschwenkt, so daß in gleicher Weise wie bei der Ausführungsform nach den Fig. 2 bis 5 ein Zug auf das Zugseil 24b ausgeübt wird, um den Sperrstift 44 in seine Freigabestellung zu verlagern.

Nach der Montage des Fahrzeugsitzes stützt sich die Tastrolle 62 auf der Schiene 16 ab, analog zu dem in Fig. 5 gezeigten Zustand, jedoch ist eine Rückführung des Sperrstiftes 44 in den Sperrzustand nur möglich, indem der Zwischenhebel 70 relativ zum Tasthebel 52 verschwenkt wird. Eine solche Schwenkbewegung des Zwischenhebels 70 wird dadurch erzwungen, daß der Druckfinger 68 der Handhabe 28 gegen das Kopfstück 74 drückt. Auch bei dieser Ausführungsform erfolgt also eine selbsttätige Sicherung der Trägheitsmasse 30 des Sensors 22, sobald die Handhabe 28 betätigt wird.

Bei einem Ausbau des Fahrzeugsitzes wird die Tastrolle 62 freigegeben und tritt durch die Öffnung 64 wieder in den Innenraum des Führungsprofils 14 ein. Durch die Druckfeder 46 wird der Sperrstift 44 wieder in seine Sperrstellung verlagert. Die Sicherung der Trägheitsmasse erfolgt also selbsttätig bei jedem Ausbau des Fahrzeugsitzes.

Es kann zweckmäßig sein, die Rückbewegung des Sperrstiftes 44 aus dem Sperrzustand in den Freigabezustand zu verzögern, da auch unmittelbar nach dem Loslassen der Handhabe 28 Stöße auftreten können. Bei der in Fig. 7 gezeigten Ausführungsform wird die axiale Verschiebebewegung des Sperrstiftes 44 durch eine Hemmeinrichtung verzögert. Diese Hemmeinrichtung besteht aus einer spannzangenartigen, axial geschlitzten Hülse 80 mit einer zylindrischen Innenbohrung und einem kegelstumpfförmigen Außenmantel, der in eine konische Bohrung des Gehäuses 28 eingesetzt ist. Eine Druckfeder 82 stützt sich zwischen der Hülse 80 und einer die konische Gehäusebohrung innenseitig verschließenden Ringscheibe 84 ab, die den durch die zylindrische Bohrung der Hülse 80 eingesetzten Sperrstift 44 umgibt. Die Hülse 80 hemmt die Bewegung des Sperrstiftes nur in Auswärtsrichtung, so daß die Bewegung in den Sperrzustand unverzögert erfolgt.

## Patentansprüche

1. Ansteuermechanismus für eine an einem Fahrzeugsitz angebrachte Rückstrammeinrichtung (18) eines Sicherheitsgurt-Rückhaltesystems in Fahrzeugen, mit in einem Gehäuse (29) angeordneten Funktionsteilen, die eine Sperreinrichtung (44, 46) zur Sperrung der Ansteuerfunktion umfassen, wobei diese Sperreinrichtung zwischen einem Sperrzustand und einem Freigabezustand umsteuerbar ist und zur Umsteuerung der Sperreinrichtung zwischen ihren zwei Zuständen ein Sperrelement (44) in einer Wandung des Gehäuses (29) verschiebbar gelagert ist und sich durch diese Wandung vom Inneren des Gehäuses nach außen erstreckt, dadurch gekennzeichnet, daß das Sperrelement (44) durch einen Taster (52) betätigbar ist, der am Sitzrahmen (12) beweglich gelagert ist und mit seinem Tastende (62) bei unmontiertem Fahrzeugsitz (10) in die Schiebebahn hineinragt, die am Sitzrahmen (12) für die Aufnahme der am Fahrzeugaufbau befestigten Schienen (16) gebildet ist, sowie bei der Montage des Fahrzeugsitzes im Fahrzeug durch eine dieser Schienen (16) aus der Schiebebahn herausgedrückt wird.

2. Ansteuermechanismus nach Anspruch 1, dadurch gekennzeichnet, daß das Sperrelement (44) durch Federkraft (46) in seinen Sperrzustand vorgespannt ist.

3. Ansteuermechanismus nach Anspruch 1 oder 2, dadurch gekennzeichnet, daß der Taster (52) durch einen am Sitzrahmen (12) schwenkbar gelagerten Hebel gebildet ist.

4. Ansteuermechanismus nach einem der vorstehenden Ansprüchen, dadurch gekennzeichnet, daß der Taster (52) durch Betätigung einer zur Sitzentriegelung vorgesehenen Handhabe (28) im Sinne einer Umsteuerung des Sperrelements (44) in seinen Sperrzustand bewegbar ist, nachdem sein Tastende (62) durch die Schiene (16) aus der Schiebebahn herausgedrückt wurde.

5. Ansteuermechanismus nach Anspruch 4, dadurch gekennzeichnet, daß der Taster (52) sowohl schwenkbar als auch translationsverschiebbar gelagert ist und bei Betätigung durch die Schiene (16) eine Schwenkbewegung, bei Bewegung durch die Handhabe (28) aber eine Translationsbewegung ausführt.

6. Ansteuermechanismus nach Anspruch 5, dadurch gekennzeichnet, daß der Taster (52) mittels eines Langlochs (56) und eines in dieses eingreifenden Lagerstiftes (54) sowohl schwenkbar als auch verschiebbar gelagert ist.

7. Ansteuermechanismus nach Anspruch 6, dadurch gekennzeichnet, daß der Taster (52) durch ein federbelastetes Druckelement (58), dessen Wirkrichtung der Richtung der durch die Handhabe (28) veranlaßten Translationsbewegung entgegengesetzt ist, in eine stabile Zwischenstellung (Fig. 3) gedrückt wird, in der sich das Tastende (62) auf der Schiene (16) abstützt und der Lagerstift (54) an dem einen Ende des Langlochs (56) anliegt.

8. Ansteuermechanismus nach Anspruch 4, dadurch gekennzeichnet, daß der Taster (52) mittelbar über ein Zwischenglied (70) an das Sperrelement (44) angekoppelt ist und daß dieses Zwischenglied (70) an dem Taster (52) beweglich gelagert sowie durch Federkraft (76) zu dem Taster hin vorbelastet ist.

9. Ansteuermechanismus nach Anspruch 8, dadurch gekennzeichnet, daß die Handhabe (28) das Zwischenglied (70) betätigt, während das Tastende (62) des Tasters (52) sich auf der Schiene (16) abstützt.

10. Ansteuermechanismus nach Anspruch 9, dadurch gekennzeichnet, daß das Zwischenglied (70) ein an dem Taster (52) schwenkbar gelagerter Hebel ist.

11. Ansteuermechanismus nach einem der vorstehenden Ansprüche, dadurch gekennzeichnet, daß der Taster (52) über einen Seilzug (24) mit dem Sperrelement (44) gekoppelt ist.

12. Ansteuermechanismus nach einem der vorstehenden Ansprüche, dadurch gekennzeichnet, daß der Taster (52) in einem am Sitzrahmen (12) befestigten Gehäuse (50) gelagert ist, das zu diesem hin offen ist, und daß das Tastende (62) durch eine Öffnung (64) am Sitzrahmen (12) in die Schiebebahn hineinragt.

13. Ansteuermechanismus nach Anspruch 12, dadurch gekennzeichnet, daß die Handhabe (28) einen Druckansatz (68) aufweist, der sich durch eine Öffnung (66) des Gehäuses (50) in Richtung des Tasters (52) erstreckt.

14. Ansteuermechanismus nach einem der vorstehenden Ansprüche, dadurch gekennzeichnet, daß das Sperrelement (44) ein axial verschiebbarer Stift (42) ist, der im Sperrzustand mit seinem inneren Ende an einer fahrzeugsensitiven Masse (30) angreift.

15. Ansteuermechanismus nach Anspruch 14, dadurch gekennzeichnet, daß dem axial verschiebbaren Stift (44) eine Hemmvorrichtung zugeordnet ist, die seine axiale Schiebebewegung verzögert.

16. Ansteuermechanismus nach einem der vorstehenden Ansprüche, dadurch gekennzeichnet, daß am Tastende des Tasters (52) eine Tastrolle (62) drehbar gelagert ist.

## Claims

1. Control mechanism for a tightening means (18), attached to a vehicle seat, of a safety belt restraining system in vehicles, comprising functional components which are arranged in a housing (29) and which include a blocking means (44, 46) for blocking the drive function, said blocking means being switchable between a blocking state and a release state, and for switching the blocking means between its two states a blocking element (44) is displaceably mounted in a wall of the housing (29) and extends outwardly through said wall from the interior of the housing, characterized in that the blocking element (44) is actuable by a feeler (52) which is movably mounted on the seat frame (12) and with its sensing end (62) when the vehicle seat (10) is not mounted projects into the slide track which is formed on the seat frame (12) for receiving the rails (16) secured to the vehicle bodywork, and on the assembly of the vehicle seat in the vehicle is pressed by one of said rails (16) out of the slide track.

2. Control mechanism according to claim 1, characterized in that the blocking element (44) is biased by spring force (46) into its blocking state.

3. Control mechanism according to claim 1 or 2, characterized in that the feeler (52) is formed by a lever mounted pivotally on the seat frame (12).

4. Control mechanism according to any one of the preceding claims, characterized in that the feeler (52) is movable by actuation of a hand grip (28) provided for unlocking the seat in the sense of switching the blocking element (44) into its blocking state after the sensing end (62) thereof has been pressed by the rail (16) out of the slide track.

5. Control mechanism according to claim 4, characterized in that the feeler (52) is mounted both pivotally and also translationally displaceably and on actuation by the rail (16) executes a pivot movement but on movement by the hand grip (28) executes a translational movement.

6. Control mechanism according to claim 5, characterized in that the feeler (52) is mounted both pivotally and displaceably by means of a slot (56) and a bearing pin (54) engaging into said slot.

7. Control mechanism according to claim 6, characterized in that the feeler (52) is pressed into a stable intermediate position (Fig. 3) by a spring-loaded pressure element (58), the acting direction of which is opposite to the direction of the translational movement caused by the hand grip (28), and in said intermediate position the sensing end (62) bears on the rail (16) and the bearing pin (54) bears on the one end of the slot (56).

8. Control mechanism according to claim 4, characterized in that the feeler (52) is coupled indirectly via an intermediate member (70) to the blocking element (44) and that said intermediate member (70) is mounted movably on the feeler (52) and is biased by spring force (76) towards the feeler.

9. Control mechanism according to claim 8, characterized in that the hand grip (28) actuates the intermediate member (70) whilst the sensing end (62) of the feeler (52) bears on the rail (16).

10. Control mechanism according to claim 9, charactered in that the intermediate member (70) is a lever pivotally mounted on the feeler (52).

11. Control mechanism according to any one of the preceding claims, characterized in that the feeler (52) is coupled via a sheathed cable (24) to the blocking element (44).

12. Control mechanism according to any one of the preceding claims, characterized in that the feeler (52) is mounted in a housing (50) which is secured to the seat frame (12) and which is open towards the latter and that the sensing end (62) projects through an opening (64) on the seat frame (12) into the slide track.

13. Control mechanism according to claim 12, characterized in that the hand grip (28) comprises a pressure lug (68) which extends through an opening (66) of the housing (50) in the direction of the feeler (52).

14. Control mechanism according to any one of the preceding claims, characterized in that the blocking element (44) is an axially displaceable pin (42) which in the blocking state engages with its inner end on a vehicle-sensitive mass (30).

15. Control mechanism according to claim 14, characterized in that a retarding device retarding the axial displacement movement of the pin (44) is associated with said axially displaceable pin (44).

16. Control mechanism according to any one of the preceding claims, characterized in that a sensing roller (62) is rotatably mounted at the sensing end of the feeler (52).

## Revendications

1. Mécanisme de commande d'un dispositif de rétraction (18) monté sur un siège de véhicule et destiné à un système de retenue à ceinture de sécurité pour véhicules, mécanisme comprenant des éléments fonctionnels disposés dans un boîtier (29) et comportant un dispositif (44, 46) de blocage de la fonction de commande, ce dispositif de blocage pouvant subir une inversion entre un état de blocage et un état de libération et un élément de blocage (44) étant monté déplaçable dans une cloison du boitier (29) pour l'inversion du dispositif de blocage entre ses deux états et allant de l'intérieur du boîtier vers l'extérieur à travers cette cloison, caractérisé en ce que l'élément de blocage (44) est manoeuvrable par un palpeur (52) gui est monté mobile sur le châssis (12) du siège et dont l'extrémité palpeuse (62), lorsque le siège (10) du véhicule n'est pas monté, pénètre dans la voie de coulissement qui est formée sur le châssis (12) du siège pour loger les barres (16) fixées à l'infrastructure du véhicule et, au montage du siège dans le véhicule, ladite extrémité palpeuse (62) est refoulée hors de la voie de coulissement par une de ces barres (16).

2. Mécanisme de commande selon la revendication 1, caractérisé en ce que la force d'un ressort (46) exerce sur l'élément de blocage (44) une précontrainte tendant à le maintenir à son état de blocage.

3. Mécanisme de commande selon la revendication 1 ou 2, caractérisé en ce que le palpeur (52) est formé d'un levier monté pivotant sur le châssis (12) du siège.

4. Mécanisme de commande selon l'une des revendications précédentes, caractérisé en ce que l'actionnement d'une manette (28) prévue pour le déverrouillage du siège déplace le palpeur (52) dans le sens d'une inversion de l'élément de blocage (44) pour le mettre à son état de blocage après que son extrémité palpeuse (62) a été refoulée hors de la voie de coulissement par la barre (16).

5. Mécanisme de commande selon la revendication 4, caractérisé en ce que le palpeur (52) est monté aussi bien pivotant que mobile en translation et, lorsqu'il est actionné par la barre (16), il exécute un mouvement de pivotement, mais lorsqu'il est déplacé par la manette (28), il exécute un mouvement de translation.

6. Mécanisme de commande selon la revendication 5, caractérisé en ce que le palpeur (52) est monté aussi bien pivotant que mobile en translation au moyen d'une boutonnière (56) et d'une cheville de montage (54) pénétrant dans cette dernière.

7. Mécanisme de commande selon la revendication 6, caractérisé en ce qu'un élément de poussée (58) soumis à la force d'un ressort et dont le sens d'action est opposé à celui du mouvement de translation provoqué par la manette (28) repousse le palpeur (52) à une position intermédiaire stable (Figure 3) dans laquelle l'extrémité palpeuse (62) prend appui sur la barre (16) et la broche de montage (54) est appliquée contre l'une des extrémités de la boutonnière (56).

8. Mécanisme de commande selon la revendication 4, caractérisé en ce que le palpeur (52) est relié indirectement à l'élément de blocage (44) par un organe intermédiaire (70) et en ce que cet organe intermédiaire (70) est monté mobile sur le palpeur (52) et soumis à une force élastique (76) tendant à le rapprocher du palpeur.

9. Mécanisme de commande selon la revendication 8, caractérisé en ce que la manette (28) actionne l'organe intermédiaire (70) pendant que l'extrémité palpeuse (62) du palpeur (52) prend appui sur la barre (16).

10. Mécanisme de commande selon la revendication 9, caractérisé en ce que l'organe intermédiaire (70) est un levier monté pivotant sur le palpeur (52).

11. Mécanisme de commande selon l'une des revendications précédentes, caractérisé en ce que le palpeur (52) est relié à l'élément de blocage (44) par un câble de transmission (24).

12. Mécanisme de commande selon l'une des revendications précédentes, caractérisé en ce que le palpeur (52) est monté dans un boîtier (50) fixé au châssis (12) du siège et ouvert vers ce châssis et en ce que l'extrémité palpeuse (62) pénètre dans la voie de coulissement par un trou (64) du châssis (12) du siège.

13. Mécanisme de commande selon la revendication 12, caractérisé en ce que la manette (28) comporte un appendice de poussée (68) passant par un trou (66) du boîtier (50) et orienté vers le palpeur (52).

14. Mécanisme de commande selon l'une des revendications précédentes, caractérisé en ce que l'élément de blocage (44) est une tige (42) déplaçable axialement et dont l'extrémité interne, lorsqu'il est à l'état de blocage, attaque une masse (30) répondant au véhicule.

15. Mécanisme de commande selon la revendication 14, caractérisé en ce qu'un dispositif de freinage affecté à la tige (44) déplaçable axialement en ralentit le mouvement axial.

16. Mécanisme de commande selon l'une des revendications précédentes, caractérisé en ce qu'un galet palpeur (62) est monté rotatif à l'extrémité palpeuse du palpeur (52).
